# EUROPEAN PATENT APPLICATION

(11) **EP 3 561 355 A1**
(43) Date of publication of application: **30.10.2019**
(21) Application number: 17886093.8
(22) Date of filing: 22.12.2017
(51) Int. Cl.: F16L 11/11, B32B 1/08, B32B 3/30, B32B 5/18

(54) **COMPOSITE PIPE AND METHOD FOR MANUFACTURING COMPOSITE PIPE**

(30) Priority: 26.12.2016 JP 2016251951
(71) Applicant: Bridgestone Corporation, Tokyo 104-8340 (JP)
(72) Inventor: SASAKI, Haruto, Tokyo 104-8340 (JP); MITSUHASHI, Kohei, Tokyo 104-8340 (JP)
(74) Representative: Oxley, Robin John George
(86) International application number: PCT/JP2017/046176
(87) International publication number: WO 2018/123886

(57) **Abstract**

A composite pipe including a pipe body having a tubular shape and including a resin material, a covering layer including a resin material, the covering layer having a tubular shape and covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, and the covering layer being shortenable in the axial direction of the pipe body by being guided along the outer circumference of the pipe body, a porous resin layer being disposed between the pipe body and the covering layer and being held by the groove portions and the pipe body, and a low-friction resin layer disposed between the pipe body and the porous resin layer, an inner circumferential surface of the low-friction resin layer having a lower slide resistance value than a slide resistance value of an inner circumferential surface of the porous resin layer.

## Description

### Technical Field

The present disclosure relates to a composite pipe having a multilayer structure, and a method of manufacturing a composite pipe.

### Background Art

Various pipes for covering of piping have been conventionally proposed in order to protect piping.

For example, Japanese Patent Application Laid-Open (JP-A) No. 2000-154890 discloses a tube for fuel piping, the tube including an inner layer including a polybutylene naphthalate resin, which is to be brought into contact with fuel, an outer layer including a polyamide resin or a polyolefin resin, and, between the inner layer and the outer layer, an intermediate resin layer for adhesion of the inner layer and the outer layer.

JP-A No. 2004-322583 discloses a corrugated pipe including an internal layer of an olefin-based elastomer, an intermediate layer as a foaming layer of an olefin-based elastomer, and an external layer of low-density polyethylene.

### SUMMARY OF INVENTION

### Technical Problem

It is conceivable to, in a composite pipe including an interior pipe body and a bellows-shaped covering layer for covering the outer circumferential surface of the pipe body, dispose a porous resin layer as a shock-absorbing layer between the pipe body and the covering layer from the viewpoint of further enhancing in shock-absorbing properties. In such a composite pipe, the covering layer is required to be displaced to expose an end of the interior pipe body when a coupling or the like is connected to an end of the interior pipe body. After the coupling or the like is connected to the end of the pipe body, the covering layer is required to be returned to an initial length to cover the pipe body again.

However, when the covering layer is exposed and then returned to an initial length, the porous resin layer is subjected to oppositely-directed frictional forces applied from the covering layer located on an outer circumferential surface thereof, which moves in the axial direction of the composite pipe to recover, and the pipe body located on an inner circumferential surface thereof. Thus, the porous resin layer does not follow the moving of the covering layer, and a phenomenon may occur in which the porous resin layer is entangled and partially curled in clusters due to the oppositely-directed frictional forces applied from the outer circumferential surface and the inner circumferential surface thereof. The occurrence of such entanglement may cause the porous resin layer to not return to the initial position in some cases.

In this regard, for example, a method in which a pipe body or a covering layer is coated with a lubricant is also conceivable. However, this process is not preferable in some cases because the lubricant is spattered on the ground.

In view of such circumstances, an object of an aspect of the present disclosure is to provide a composite pipe including a pipe body having a tubular shape, a covering layer that has a tubular shape and covers an outer circumferential surface of the pipe body, and a porous resin layer disposed between the pipe body and the covering layer, in which the occurence of entanglement (curl) of the porous resin layer is inhibited when an end of the covering layer is shortened and deformed to expose an end of the pipe body and then the shortened covering layer is elongated to the initial length.

### Solution to Problem

The above problems are solved by the following disclosure.
<1> A composite pipe including a pipe body having a tubular shape and including a resin material, a covering layer including a resin material, the covering layer having a tubular shape and covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body, a porous resin layer being disposed between the pipe body and the covering layer and being held by the groove portions and the pipe body, and a low-friction resin layer disposed between the pipe body and the porous resin layer, an inner circumferential surface of the low-friction resin layer having a lower slide resistance value than a slide resistance value of an inner circumferential surface of the porous resin layer.

### Advantageous Effects of Invention

According to an aspect of the present disclosure, there can be provided a composite pipe including a pipe body having a tubular shape, a covering layer having a tubular shape and covering an outer circumferential surface of the pipe body, and a porous resin layer disposed between the pipe body and the covering layer, in which the occurence of entanglement (curl) of the porous resin layer is inhibited when an end of the covering layer is shortened and deformed to expose an end of the pipe body and then the shortened covering layer is elongated to the initial length.

### BRIEF DESCRIPTION OF DRAWINGS

Figure 1 is a perspective view illustrating a composite pipe according to an embodiment of the present disclosure.
Figure 2 is a vertical cross-sectional view illustrating a composite pipe according to an embodiment of the present disclosure.
Figure 3 is a partially enlarged view of a vertical cross-section of a composite pipe according to an embodiment of the present disclosure.
Figure 4 is a perspective view illustrating a composite pipe according to another embodiment of the present disclosure.
Figure 5 is a vertical cross-sectional view illustrating a state in which an end of a pipe body of a composite pipe according to an embodiment of the present disclosure is exposed.
Figure 6 is a view illustrating a process in which a covering layer and a porous resin layer in the vertical cross-section portion in Figure 3 are being shortened and deformed.
Figure 7 is a view illustrating a state in which a covering layer and a porous resin layer in the vertical cross-section portion in Figure 3 are shortened and deformed.
Figure 8 is a perspective view illustrating a state in which an end of a pipe body of a composite pipe according to an embodiment of the present disclosure is exposed.
Figure 9 is a view illustrating a step of manufacturing the composite pipe of the present disclosure.
Figure 10 is a vertical cross-sectional view of a composite pipe including a pipe body, a porous resin layer, and a bellows-shaped covering layer, for illustrating a force acting on the porous resin layer from the covering layer and a force acting on the porous resin layer from the pipe body when the covering layer is shortened and deformed and then returned to an initial length.
Figure 11 is a view illustrating a portion of a conventional composite pipe, in which a porous resin layer is entangled and thus partially curled in clusters.

### DESCRIPTION OF EMBODIMENTS

Hereinafter, an embodiment as an example of the composite pipe according to the present disclosure is described in detail appropriately with reference to the drawings. It is meant that constituent components indicated by the same symbol in each drawing are the same constituent components. It is noted that descriptions and symbols overlapped in the embodiment described below may be omitted.

It is noted that the present disclosure is not limited to the following embodiment at all and can be appropriately modified and carried out without departing from the object of the present disclosure.

In the present specification, those numerical ranges that are stated with "to" each denote a range that includes the numerical values stated before and after "to" as the lower and upper limit values, respectively.

The term "step" used herein encompasses not only discrete steps but also those steps which cannot be clearly distinguished from other steps, as long as the intended purpose of the step is achieved.

In the present specification, when reference is made to the amount of a component contained in a composition and there are plural substances corresponding to the component in the composition, the indicated amount of the component means the total amount of the plural substances existing in the composition unless otherwise specified.

The "main component" herein refers to a component having the highest content on a mass basis in a mixture, unless particularly noted.

### <Composite Pipe>

A composite pipe according to one embodiment of the present disclosure includes a pipe body having a tubular shape, a covering layer having a tubular shape and covering an outer circumferential surface of the pipe body, a porous resin layer disposed between the pipe body and the covering layer, and a low-friction resin layer disposed between the pipe body and the porous resin layer.

The pipe body includes a resin material. In other words, the pipe body is made of a resin material including a resin.

The covering layer includes a resin material. In other words, the covering layer is made of a resin material including a resin. The covering layer has a bellows shape with annular ridge portions protruding outwardly in a radial direction and annular groove portions depressed inwardly in the radial direction, the annular ridge portions and the annular groove portions being alternately formed in an axial direction of the pipe body, and the covering layer is shortenable in the axial direction of the pipe body by being guided along the outer circumferential surface of the pipe body.

The porous resin layer is disposed so as to be held by the groove portions and the pipe body.

An inner circumferential surface of the low-friction resin layer has a lower slide resistance value than a slide resistance value of an inner circumferential surface of the porous resin layer.

The occurence of entanglement of the porous resin layer of the composite pipe is suppressed when an end of the covering layer is shortened and deformed to expose an end of the pipe body and then shortened covering layer is elongated to the initial lengthi, because the low-friction resin layer is disposed between the pipe body and the porous resin layer. Specifically, such suppression is made as follows.

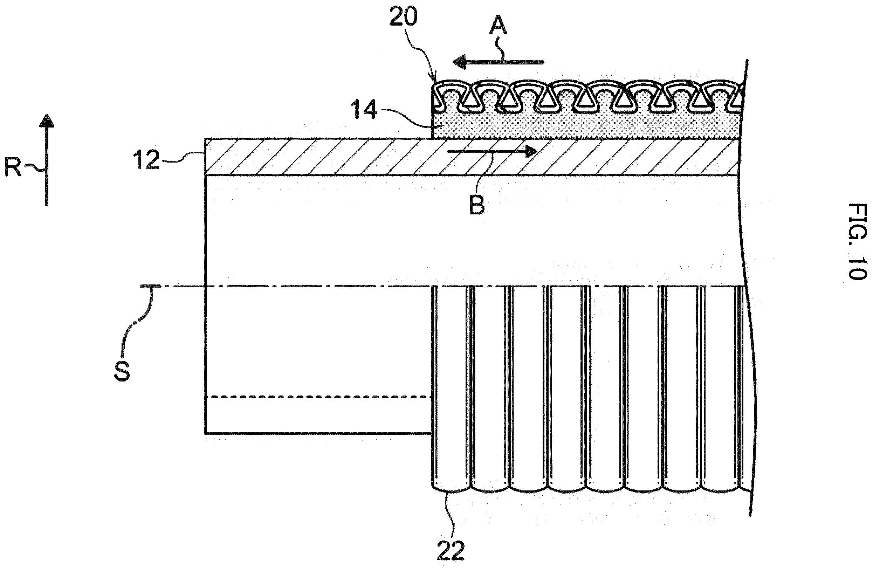

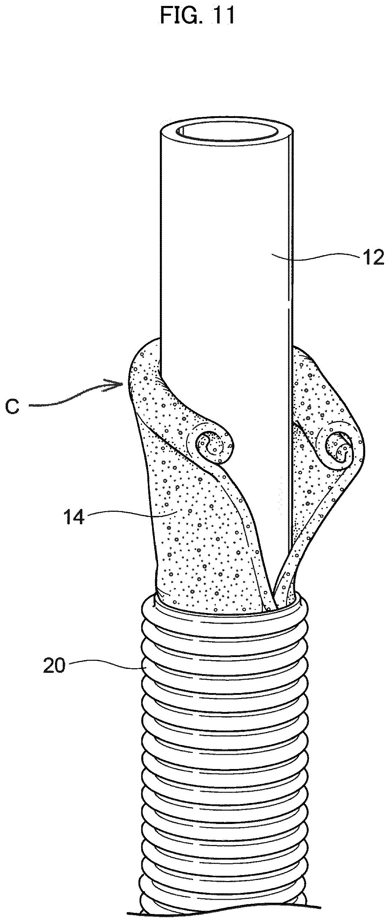

In a composite pipe including a pipe body, a porous resin layer, and a bellows-shaped covering layer, an end of the covering layer is required to be shortened and displaced to expose an end of an interior pipe body when a coupling or the like is connected to an end of the pipe body, and after the coupling or the like is connected to the end of the pipe body, the covering layer shortened is required to be elongated and returned to an initial length to cover the pipe body again. However, as illustrated in Figure 10, in a composite pipe including a pipe body, a porous resin layer, and a covering layer layered in the listed order, when an end of the pipe body 12 is exposed and then the covering layer 20 is returned to an initial length, the covering layer 20 moves in the axial direction, thus a force acting on a porous resin layer 14 from a covering layer 20 is applied in an arrow A direction, and, in this regard, a force acting on the porous resin layer 14 from a pipe body 12 is applied in an arrow B direction due to the pipe body 12 which is tried to relatively remain in its location against the moving of the covering layer 20 in the axial direction. In other words, oppositely-directed frictional forces are applied to the porous resin layer 14 from the covering layer 20 (outer periphery) and the pipe body 12 (inner periphery), respectively. Thus, in a case in which the porous resin layer 14 does not completely follow the moving of the covering layer 20, a phenomenon may occur in which the porous resin layer 14 is entangled and partially curled in clusters due to the oppositely-directed frictional forces applied from the outer curcumferential surface and the inner circumferential surface thereof. Figure 11 illustrates a view of a section of a porous resin layer 14 which is entangled and partially curled in clusters. As in a composite pipe illustrated in Figure 11, any entanglement C occurs at an end of the porous resin layer 14. The drawing illustrating a section in which the entanglement C occurs illustrates the section in which the entanglement C occurs, in which the section is exposed due to re-shortening of a covering layer 20. While Figure 11 illustrates the entanglement C which occurs at an end of the porous resin layer 14, such entanglement (curling) may also occur at not such an end of the porous resin layer 14, but a central part in the axial direction (midstream in the axial direction).

On the contrary, the composite pipe in which the low-friction resin layer is disposed between the pipe body and the porous resin layer is low in the slide resistance value of the inner circumferential surface of the low-friction resin layer, and thus is easily slid. Thus, when an end of the covering layer is shortened and deformed to expose an end of the pipe body and then the covering layer is returned to an initial length, the porous resin layer and the low-friction resin layer favorably follow the movement of elongation in the axial direction of the covering layer, and a phenomenon is suppressed in which entanglement and thus partial curling in clusters occur. As a result, such an end of the pipe body, exposed, can be favorably covered again with the low-friction resin layer, the porous resin layer, and the covering layer.

The "slide resistance value" is here specifically measured as follows.

The slide resistance value of the inner circumferential surface of the low-friction resin layer is determined by, first, disposing the covering layer on the outer circumferential surface of the pipe body, inserting the porous resin layer, and the low-friction resin layer whose slide resistance value is to be measured, between the pipe body and the covering layer so that the low-friction resin layer is in contact with the pipe body, thereby forming a composite pipe having a length of 200 mm, and then connecting one end of the composite pipe to the tip of a force gauge (Digital Force Gauge DS2 for hand held, manufactured by IMADA CO., LTD.), thereby measuring the force (unit: N) in displacement of the covering layer at the other end of the composite pipe by 50 mm.

The slide resistance value of the inner circumferential surface of the porous resin layer is determined by disposing the covering layer on the outer circumferential surface of the pipe body, inserting the porous resin layer whose slide resistance value is to be measured, between the pipe body and the covering layer so that the porous resin layer is in contact with the pipe body, thereby forming a composite pipe having a length of 200 mm, and then measuring the slide resistance value of the porous resin layer in the same manner as in measurement of the slide resistance value of the low-friction resin layer.

Next, a mode for carrying out the composite pipe of the present disclosure is described by way of example based on the drawings.

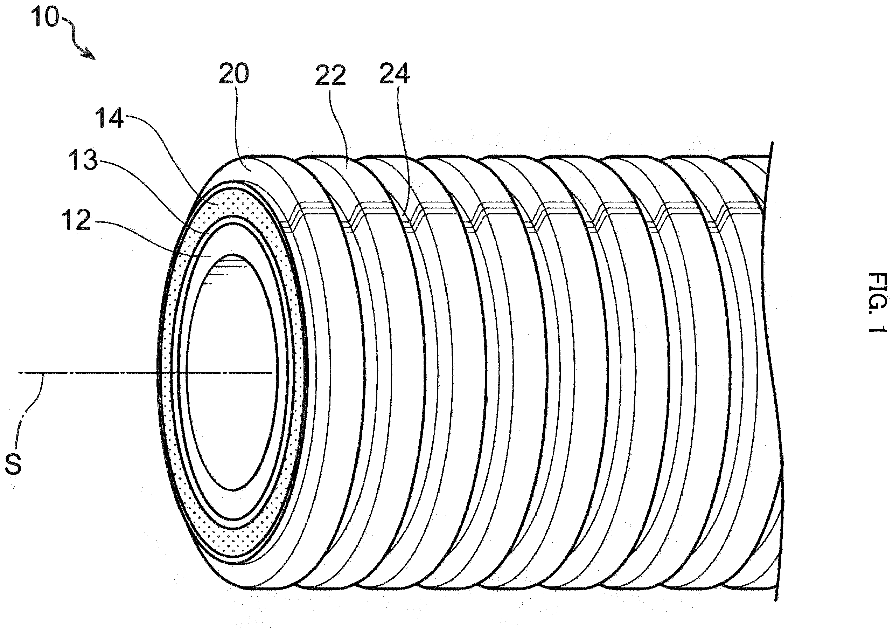

A composite pipe 10 according to the present embodiment, illustrated in Figure 1, includes a pipe body 12, a low-friction resin layer 13, a porous resin layer 14, and a covering layer 20.

### (Pipe Body)

The pipe body 12 has a tubular shape, and is a resin pipe including a resin material. In other words, the pipe body is made of a resin material including a resin.

Examples of the resin in the resin material include polyolefins such as polybutene, polyethylene, crosslinked polyethylene, and polypropylene, and vinyl chloride, and such resins may be used singly, or in combination of two or more kinds thereof. In particular, polybutene is suitably used, the resin preferably includes polybutene as a main component, and, for example, the resin material included in the pipe body more preferably includes 85% by mass or more of polybutene.

The resin material included in the pipe body may be a material made of only the resin, or may contain other additive(s), provided that the resin is included as a main component.

A diameter (outer diameter) of the pipe body 12 is not particularly limited, and, for example, can be in a range of from 10 mm to 100 mm and is preferably in a range of from 12 mm to 35 mm.

The thickness of the pipe body 12 is not particularly limited, and, for example, can be from 1.0 mm to 5.0 mm, preferably from 1.5 mm to 3.0 mm.

### (Covering Layer)

The covering layer 20 has a tubular shape, and covers the outer circumferential surfaces of the pipe body 12, the low-friction resin layer 13, and the porous resin layer 14. The porous resin layer 14 is disposed between the low-friction resin layer 13 and the covering layer 20, and the low-friction resin layer 13 is disposed between the pipe body 12 and the porous resin layer 14.

The covering layer includes a resin material. In other words, the covering layer is made of a resin material including a resin. Examples of the resin included in the resin material included in the covering layer include polyolefins such as polybutene, polyethylene, polypropylene, and crosslinked polyethylene, and vinyl chloride, and such resins may be used singly, or in combination of two or more kinds thereof. In particular, low-density polyethylene is suitably used, the resin preferably includes low-density polyethylene as a main component, and, for example, the resin material included in the covering layer more preferably includes 80% by mass or more, still more preferably 90% by mass or more of low-density polyethylene.

The melt flow rate (MFR) of the resin to be used is preferably from 0.25 to 0.8. The MFR of the covering layer is more preferably from 0.3 to 0.6, still more preferably from 0.35 to 0.5. In a case in which the MFR is 0.25 or more, the resin of the covering layer 20 can easily enter a porous structure of the porous resin layer 14, thereby resulting in an enhancement in the degree of adhesion of the porous resin layer 14 and groove portions 24 of the covering layer 20, described below. In a case in which the MFR is 0.8 or less, burr is less likely to occur.

The resin material included in the covering layer may be a material made of only the resin, or may contain other additive(s), provided that the resin is included as a main component.

The covering layer preferably includes polyethylene as a main component and has a density of from 915 kg/m³ to 940 kg/m³.

In the composite pipe, an end of the covering layer is required to be shortened and displaced to expose an end of an interior pipe body when a coupling or the like is connected to an end of the pipe body. Thus, the covering layer for covering the pipe body is required to have ease of expansion and contraction (peeling properties) which enable the covering layer to be easily expanded and contracted in the axial direction of the pipe body. In a case in which the covering layer has a density of 940 kg/m³ or less, the covering layer can have proper flexibility and the covering layer can be easily shortened and peeled in exposure of an end of the pipe body, thereby resulting in easy exposure of an end of the pipe body.

In a case in which the covering layer has a density of 915 kg/m³ or more, the covering layer has proper strength, and high protection properties on the outer circumferential surface of the composite pipe is achieved.

The density of the covering layer is more preferably from 918 kg/m³ to 935 kg/m³, still more preferably from 920 kg/m³ to 930 kg/m³.

The density of the covering layer can be here measured according to "A method (water displacement method)" prescribed in JIS-K7112 (1999).

The method of controlling the density of the covering layer within the above range is not particularly limited, and examples thereof include a method of adjusting the molecular structure of polyethylene (namely, adjusting the molecular structure of a monomer serving as a raw material of polyethylene, and/or the crosslinked structure thereof) and a method of adjusting the molecular weight of polyethylene, in a case in which polyethylene is included as a main component in the covering layer.

The covering layer preferably has a melt flow rate (MFR) of from 0.25 to 0.8.

The covering layer is formed by, for example, applying a molten product of a resin composition for covering layer formation onto the outer circumferential surface of the porous resin layer, and solidifying the molten product which is being formed into a bellows shape. In order to form the molten product of a resin composition for covering layer formation, into a bellows shape, for example, a pair of molds each having a semi-arc inner surface having a bellows shape are made to approach the outer circumferential surface of the molten product from two directions to come into contact, and the molten product is solidified to form a bellows shape.

In a case in which the covering layer has a MFR of 0.8 or less, fluidity in melting of the resin composition for covering layer formation is adjusted within a proper range, and it is inhibited that the molten product flows into a contact portion between the pair of molds and forms any burr outward in a radial direction on the covering layer. Thus, obstructing a movement for shortening and displacement of the covering layer to expose an end of the pipe body by any burr is inhibited, and ease of expansion and contraction (peeling properties) is more excellent. Moreover, a step of removing any burr generated outward in the radial direction on the covering layer can be omitted, and complicated manufacturing process of the composite pipe can be avoided.

In a case in which the covering layer has an MFR of 0.25 or more, ease of applying the molten product of a resin composition for covering layer formation onto the outer circumferential surface of the pipe body and/or the outer circumferential surface of an intermediate layer with is obtained. Furthermore, the resin of the covering layer can be easy to enter a porous structure of the porous resin layer, thereby resulting in an enhancement in the degree of adhesion of the porous resin layer and the groove portions of the covering layer.

The MFR of the covering layer is more preferably from 0.30 to 0.6, still more preferably from 0.35 to 0.5.

The MFR of the covering layer here corresponds to a value obtained by measurement in conditions of a temperature of 190°C and a load of 2.16 kg according to the method prescribed in JIS K7210-1 (2014).

While the unit of the MFR is "g/10 minutes", the designation of the unit is herein omitted.

The method of controlling the MFR of the covering layer within the above range is not particularly limited, and examples include a method of adjusting the molecular structure of polyethylene (namely, adjusting the molecular structure of a monomer serving as a raw material of polyethylene, and/or a crosslinked structure thereof) and a method of adjusting the molecular weight of polyethylene, in a case in which polyethylene is included as a main component in the covering layer.

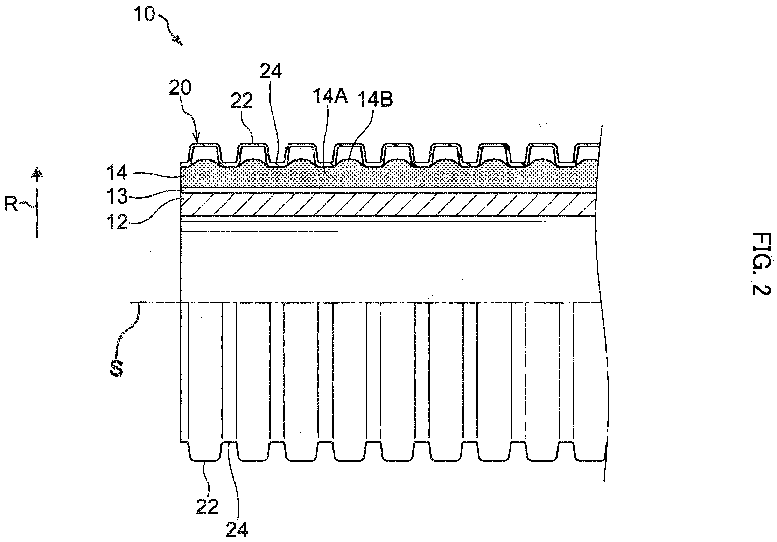

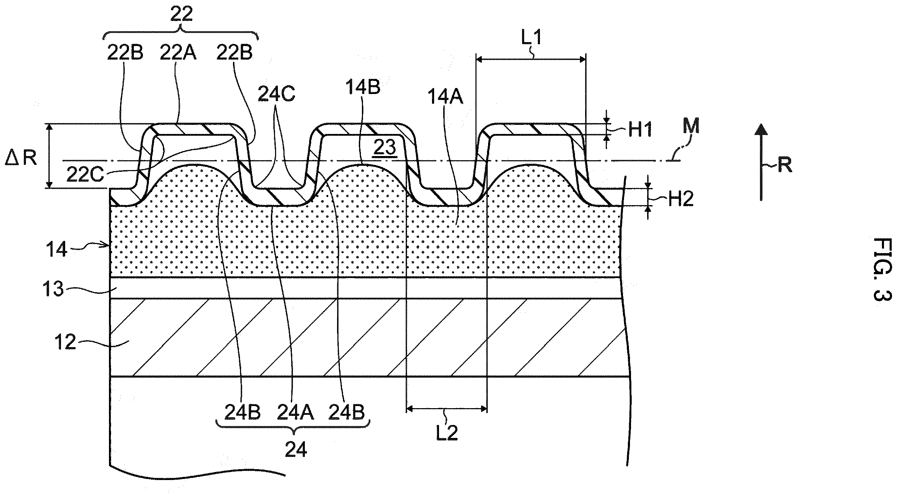

As illustrated in Figure 2, a covering layer 20 has a bellows shape, and annular ridge portions 22 protruding outwardly in a radial direction and annular groove portions 24 depressed inwardly in the radial direction are alternately continuously formed in an axial direction S of a pipe body 12. The ridge portions 22 is disposed more outward in a radial direction R, than the groove portions 24. As illustrated in Figure 3, in a case in which outermost portions of a bellows-shaped covering layer 20 in the radial direction are defined as outer walls 22A, and innermost portions thereof in the radial direction are defined as inner walls 24A, an intermediate portion M in the radial direction, between the outer walls 22A and the inner walls 24A is defined as a boundary, the areas outside the boundary in the radial direction are defined as ridge portions 22, and the areas inside the boundary in the radial direction are defined as a groove portions 24.

The ridge portion 22 includes anouter wall 22A extending in the axial direction S and side walls 22B extending from both ends of the outer wall 22A along with the radial direction R. Outer bent portions 22C are formed between the outer wall 22A and the side walls 22B. The groove portion 24 includes aninner wall 24A extending in the axial direction S and side walls 24B extending from both ends of the inner wall 24A along with the radial direction R. Inner bent portions 24C are formed between the inner wall 24A and the side walls 24B.

A protrusion space 23 recessed inside in the radial direction is formed inside the ridge portion 22 of the covering layer 20 in the radial direction. A projection portion 14B of a porous resin layer 14 described below is preferably inserted into the protrusion space 23.

The length L1 of each of the ridge portions 22 in the axial direction S is preferably set to be longer than the length L2 of each of the groove portions 24 in the axial direction S, but is not particularly limited. The length L1 is preferably at least 1.2-times the length L2 in order to ensure ease of deformation of the outer walls 22A in shortening and deforming described below. The length L1 is preferably at most 5-times the length L2. In a case in which the length L1 is at most 5-times the length L2, flexibility of a composite pipe 10 can be kept. In a case in which the length L1 is too long, when the composite pipe 10 is provided, contact area of the composite pipe 10 with the ground increases, thereby resulting in difficulty in the providing of the composite pipe 10.

The covering layer 20 preferably has a thickness of 0.1 mm or greater at a thinnest portion and a thickness of 0.4 mm or less at a thickest portion in order to shorten the covering layer 20. A thickness H1 of the outer wall 22A is preferably less than a thickness H2 of the inner wall 24A. Comparison of the thickness H1 with the thickness H2 is here performed by comparison of the respective averages of such thicknesses. The respective averages of the thickness H1 and the thickness H2 are defined as respective averages of values obtained by measurement at any 10 points. The thickness H1 is preferably at most 0.9-times the thickness H2 in order to ensure ease of deformation of the outer wall 22A in shortening and deforming described below.

A diameter of the covering layer 20 (the outer diameter of the outermost portion) is not particularly limited, and can be, for example, in a range of from 13 mm to 130 mm.

### (Porous Resin Layer)

The porous resin layer 14 is a layer including a resin material and having a porous structure. In other words, the porous resin layer is made of a resin material including a resin.

Examples of the resin included in the resin material included in the porous resin layer 14 include polyurethane, polystyrene, polyethylene, polypropylene and ethylene-propylene-diene rubber, and any mixture of such resins, and, in particular, polyurethane is preferable.

The porous resin layer 14 is preferably a layer including polyurethane as a main component (namely, porous urethane layer). For example, the porous resin layer preferably includes 80% by mass or more, more preferably 90% by mass or more of polyurethane in constituent components thereof. The porous resin layer may contain other additive(s).

An abundance ratio of pores in the porous resin layer 14 (for example, a foaming rate in the case of a foam) can be measured according to the method described in Appendix 1 of JIS K6400-1 (2012), and is preferably 25/25 mm, or more, more preferably 45/25 mm, or less.

The porous resin layer 14 is preferably foam.

The density of the porous resin layer is preferably from 12 kg/m³ to 22 kg/m³.

In the composite pipe, an end of the covering layer is required to be shortened and displaced to expose an end of an interior pipe body when a coupling or the like is connected to an end of the pipe body. However, the pipe body cannot be sufficiently exposed in some cases because the porous resin layer does not follow, and remains on the outer surface of the pipe body in the displacement of the covering layer. Meanwhile, in a case in which the porous resin layer has a density of 22 kg/m³ or less, the porous resin layer has proper flexibility and thus the porous resin layer favorably follows the movement of the covering layer when an end of the covering layer is shortened and displaced to expose an end of the pipe body, whereby the porous resin layer less likely to remain on the outer surface of the pipe body. As a result, such an end of the pipe body can be easily exposed.

In this regard, in a case in which the porous resin layer has a density of 12 kg/m³ or more, the porous resin layer has proper strength and it is inhibited that the porous resin layer is broken and damaged in processing in manufacturing or the like of the composite pipe 10.

The porous resin layer, which has a density of 22 kg/m³ or less, is more flexible than that which has a density of more than 22 kg/m³, and thus the porous resin layer is easily entangled when an end of the pipe body is exposed and then the covering layer is returned to the initial length. However, in the composite pipe 10 including the low-friction resin layer between the pipe body and the porous resin layer, as described above, the porous resin layer can easily follow the covering layer due to easy slipping on the inner circumferential surface of the low-friction resin layer, whereby the occurence of entanglement (curl) of the porous resin layer is inhibited.

The density of the porous resin layer is more preferably in a range of from 14 kg/m³ to 20 kg/m³, still more preferably in a range of from 16 kg/m³ to 18 kg/m³ from the viewpoint of inhibition of being left of the porous resin layer on the outer surface of the pipe body and inhibition of being broken and damaged in processing.

The density of the porous resin layer can be measured according to the method prescribed in JIS-K7222 (2005). The measurement environment is here an environment of a temperature of 23°C and a relative humidity of 45%.

The method of controlling the density of the porous resin layer within the above range is not particularly limited, and examples thereof include a method of adjusting the abundance ratio in the porous resin layer (for example, the foaming rate in the case of the foam) and a method of adjusting the molecular structure of the resin (namely, adjusting the molecular structure of a monomer serving as a raw material of the resin, and/or the crosslinked structure thereof).

The porous resin layer preferably has a hysteresis loss of 42% or more. The upper limit of the hysteresis loss is not particularly limited, and is preferably 80% or less.

The range of the hysteresis loss is preferably from 42% to 80%, more preferably from 45% to 70%, still more preferably from 47% to 60%.

When the composite pipe is produced, a method is conceivable by which, for example, the outer circumferential surface of the pipe body is wound by a sheet serving as the low-friction resin layer and a sheet serving as the porous resin layer, and is further applied by a molten product of a resin composition for covering layer formation, a pair of molds each having a semi-arc inner surface having a bellows shape are made to approach the outer circumferential surface of the molten product from two directions to come into contact, and the molten product is solidified to form a bellows-shaped. However, the molten product for applying is subjected to application of a force so as to be pushed back from the porous resin layer outward in the radial direction, whereby the molten product may be pushed out onto any contact portion between the pair of molds, thereby causing any burr to occur on the outside of the covering layer. On the contrary, in a case in which the hysteresis loss of the porous resin layer is 42% or more, flattening of the porous resin layer is adjusted to a proper range, it is inhibited that the molten product of a resin composition for covering layer formation is pushed back from the porous resin layer outward in the radial direction and is pushed out onto the contact portion between the pair of molds, and occurring of burr on the outside of the covering layer in the radial direction is easily inhibited. Thus, obstructing a movement for shortening and displacement of the covering layer to expose an end of the pipe body by any burr is inhibited, and the movement for shortening of the covering layer can be easily performed. A step of removing any burr generated on the outside of the covering layer in the radial direction can be omitted, and complicated manufacturing process of the composite pipe can be avoided.

The hysteresis loss of the porous resin layer can be measured according to the method prescribed in JIS-K6400-2 (2012). The measurement environment is here an environment of a temperature of 23°C and a relative humidity of 45%. The hysteresis loss is measured three times in total and the second result thereof are adopted.

The method of controlling the hysteresis loss of the porous resin layer within the above range is not particularly limited, and examples thereof include a method of adjusting the abundance ratio in the porous resin layer (for example, the foaming rate in the case of the foam) and a method of adjusting the molecular structure of the resin (namely, adjusting the molecular structure of a monomer serving as a raw material of the resin, and/or the crosslinked structure thereof).

The porous resin layer 14 is disposed between the pipe body 12 and the covering layer 20. The porous resin layer 14 is held by the inner walls 24A of the groove portions 24 of the covering layer 20 and the pipe body 12 with the low-friction resin layer 13 being interposed therebetween. A compressively held portion 14A is preferably formed with being further compressed by the inner wall 24A and the pipe body 12 at a location in which the holding is made.

The inner circumferential surface of the porous resin layer 14 is preferably flat, is preferably fully in contact with the outer circumferential surface of the low-friction resin layer 13, and covers the outer circumferential surface of the low-friction resin layer 13. The "fully in contact with" here means not a need for completely close contact of the entire surface, but substantial contact of the entire surface. Accordingly, for example, in a case in which the porous resin layer 14 is formed with being wound by a sheet-shaped urethane sheet, a seam portion may be partially separated or a portion wrinkled between the low-friction resin layer 13 and the covering layer 20 may be partially separated.

The porous resin layer 14 can have, for example, a sheet shape. The porous resin layer 14 can be produced by, for example, winding a sheet-shaped porous resin sheet (first sheet) that is formed in a belt manner so as to have a width which has substantially the same length as the circumferential length of the outer circumferential surface of the pipe body 12, around the pipe body 12, and also feeding a resin composition for forming the covering layer 20, to the outer circumferential surface of thereof, and molding the resin composition.

The thickness of the porous resin layer 14 is equal to or greater than the difference between the outer circumferential surface of the low-friction resin layer 13 and the inner surface in the radial direction of the inner wall 24A, in a natural state (a state at a temperature of 23°C and a relative humidity of 45%, in which there acts no force, for example, neither compression nor tension), and the thickness of the porous resin layer 14 is preferably greater than the difference.

The porous resin layer 14 is thinner in thickness on the compressively held portion 14A, than that in the natural state, due to compression. A projection portion 14B is formed between adjacent, compressively held portions 14A of the porous resin layer 14. The projection portion 14B has a larger diameter than that of the compressively held portion 14A, and is projected into the protrusion space 23. The top of the projection portion 14B (the outermost portion in the radial direction) is preferably separated from the outer wall 22A in the protrusion space 23. In a case in which the porous resin layer 14 is compressed by the inner walls 24A and the pipe body 12, the compressively held portions 14A and the projection portions 14B are alternately continuously formed in the axial direction S, and the outer circumferential surface of the porous resin layer 14 has a wave shape.

The thickness of the porous resin layer 14 in the natural state is preferably in a range of from 1 mm to 20 mm, more preferably from 2 mm to 15 mm, still more preferably from 2.5 mm to 10 mm from the viewpoint of ease of formation of the compressively held portions 14A compressed by the inner walls 24A and the pipe body 12. The thickness of the porous resin layer 14 in the natural state is defined as the average value of values obtained by measurement at any 3 points of the porous resin layer 14 taken out from the composite pipe 10.

The difference between the outer circumferential surface of the low-friction resin layer 13 and the inner surface in the radial direction of the inner wall 24A is, for example, preferably in a range of from 0.3 mm to 5 mm, more preferably from 0.5 mm to 3 mm, still more preferably from 1 mm to 2 mm.

The thickness of the porous resin layer 14 in the natural state is preferably thicker than the thickness of the low-friction resin layer 13. The porous resin layer 14 preferably plays a role of thermal protection in the composite pipe 10, and has more enhanced thermal protection properties as the thickness thereof is thicker. In this regard, in a case in which the low-friction resin layer 13 is too thick, the followability of the porous resin layer 14 and the low-friction resin layer 13 with respect to the covering layer 20 may deteriorate. Thus, in a case in which the porous resin layer 14 is relatively thicker and the low-friction resin layer 13 is relatively thinner, both the thermal protection properties and the followability with respect the covering layer 20 may increase.

The thickness of the porous resin layer 14 in the natural state is preferably from 10-fold to 200-fold, more preferably from 20-fold to 150-fold, still more preferably from 25-fold to 100-fold the thickness of the low-friction resin layer 13 from the viewpoint of the thermal protection properties and the followability with respect to the covering layer.

A length, in the axial direction S, of the porous resin layer 14 extracted from between the pipe body 12 and the covering layer 20, in the natural state is preferably from 90% to 100% of a length, in the axial direction S, of the covering layer 20. The reason for this is because in a case in which the porous resin layer 14 is elongated and retained between the pipe body 12 and the covering layer 20, relative transferring between the porous resin layer 14 and the covering layer 20 can easily occur, thereby making shortening of the porous resin layer 14 and exposure of an end of the outer circumferential surface of the pipe body 12 can be impossible when the covering layer 20 is shorten and deformed. The length, in the axial direction S, of the porous resin layer 14 in the natural state, is preferably from 90% to 100% of the length, in the axial direction, of the covering layer 20, in order to suppress such relative transferring between the porous resin layer 14 and the covering layer 20.

The inner circumferential surface of the porous resin layer 14 preferably adheres to the outer circumferential surface of the low-friction resin layer 13. In a case in which the porous resin layer 14 and the low-friction resin layer 13 is adhered the foliowability of the porous resin layer 14 and the low-friction resin layer 13 with respect to the covering layer is improved.

Examples of the method of adhesion of the porous resin layer 14 and the low-friction resin layer 13 include not only a method including applying an adhesive onto both the layers for adhesion of the layers, but also a method including adhesion according to a flame lamination method, and, in particular, a flame lamination method is preferable. In other words, the porous resin layer 14 and the low-friction resin layer 13 preferably constitute a laminated body formed by flame lamiation adhesion.

The flame lamination method is, for example, a method including weeping a soluble substance included in the porous resin layer 14 with hot-melting by flame, and adhereing to the low-friction resin layer 13 by a molten product wept. In a laminated body in which adhesion of the porous resin layer 14 and the low-friction resin layer 13 is made according to the flame lamination method (hereinafter, also referred to as "flame lamination adhesion body"), a layer for adhesion of both layers of the porous resin layer 14 and the low-friction resin layer 13 can be thinner, unlike a laminated body in which adhesion of the porous resin layer 14 and the low-friction resin layer 13 is made by applying an adhesive onto the surfaces in between both such layers (hereinafter, also referred to as "adhesion body by an adhesive "). Thus, a composite pipe 10 having such a flame lamination adhesion body not only is more enhanced in the followability of the porous resin layer 14 and the low-friction resin layer 13 with respect to the covering layer, but also is less likely to causes any burr to occur in a process of manufacturing such a composite pipe 10.

As a method of producing the composite pipe 10, for example, the following method is conceivable. A specific method includes first winding a laminated body of a sheet for forming the porous resin layer 14 (namely, a sheet serving as the porous resin layer 14) and a sheet for forming the low-friction resin layer 13 (namely, a sheet serving as the low-friction resin layer 13) onto the outer circumferential surface of the pipe body 12, then further applying a molten product of a resin composition for formation of the covering layer 20 onto the resultant, allowing a pair of molds each having a semi-arc inner surface having a bellows shape to approach the outer circumferential surface of the molten product from two directions to come into contact, and solidifying the molten product to form a bellows-shaped covering layer 20. However, the molten product applied is subjected to application of a force so as to be pushed back from the laminated body including the porous resin layer 14 and the low-friction resin layer 13, outward in the radial direction, whereby the molten product may be pushed out onto any contact portion between the pair of molds to cause any burr to occur on the exterior of the covering layer 20.

In this regard, the flame lamination adhesion body is used as a laminated body of a sheet for forming the porous resin layer 14 and a sheet for forming the low-friction resin layer 13, and thus the layer for adhesion of both the layers in the flame lamination adhesion body is thinner, thereby resulting in a reduction in the total thickness of the laminated body as compared with an adhesion body obtained by adhesion due to apllying of an adhesive onto both the layers , and thus a decrease in the force for pushing back outward in the radial direction. Thus, any burr is less likely to occur on the outside of the covering layer 20.

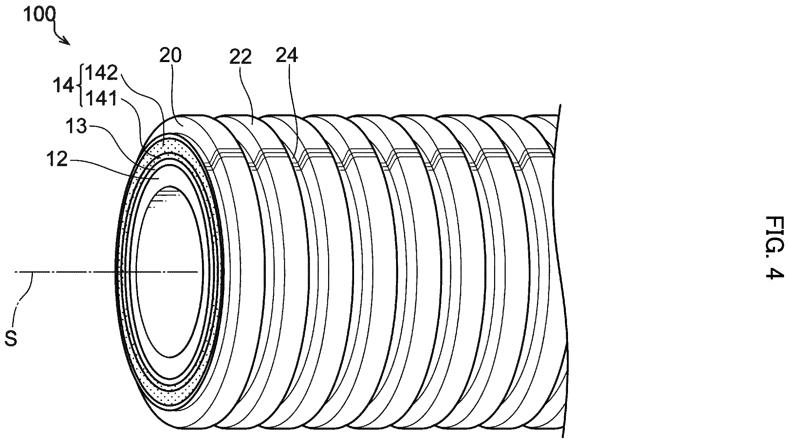

While the porous resin layer 14 in the composite pipe 10 illustrated in Figure 1 to Figure 3 is a monolayer, the porous resin layer 14 is not limited thereto and may be a multi-layer. Examples of a composite pipe in which the porous resin layer 14 is a multi-layer include a composite pipe 100 (composite pipe in which the porous resin layer 14 is a bilayer) illustrated in Figure 4.

The composite pipe 100 illustrated in Figure 4 includes a pipe body 12, a low-friction resin layer 13, a first porous resin layer 141, a second porous resin layer 142, and a covering layer 20, layered in the listed order.

### (Low-Friction Resin Layer)

The low-friction resin layer 13 includes a resin material, and is a layer having a lower slide resistance value of the inner circumferential surface than the slide resistance value of the inner circumferential surface of the porous resin layer 14. In other words, the low-friction resin layer is made of a resin material including a resin.

Examples of the low-friction resin layer 13 include a sheet-shaped resin sheet layer.

Examples of the resin included in the resin material included in the low-friction resin layer 13 include polyester, nylon, and polyolefin (for example, polyethylene, polypropylene, or polybutene).

The resin material included in the low-friction resin layer 13 may contain other additive(s), provided that the resin is included as a main component.

Examples of the form of the low-friction resin layer 13 include a non-woven fabric (for example, melt blown or spunbond), a knit (for example, Russell, tricot, or Milanese), a textile (for example, plain weave, twill weave, mock leno weave, gauze weave, or leno weave), and a film.

The low-friction resin layer 13 is, in particular, preferably a non-woven polyester fabric (namely, non-woven fabric including polyester as a main component), polyester tricot (namely, tricot knit including polyester as a main component), a non-woven nylon fabric (namely, non-woven fabric including nylon as a main component), nylon tricot (namely, knit including nylon as a main component), or a polyethylene film (namely, film including polyethylene as a main component), and is more preferably a non-woven polyester fabric or nylon tricot.

In a case in which the low-friction resin layer 13 is a non-woven fabric, the mass per unit area of the non-woven fabric is, for example, from 10 g/m² to 500 g/m², preferably from 12 g/m² to 200 g/m², more preferably from 15 g/m² to 25 g/m².

The slide resistance value (unit: N) of the inner circumferential surface of the low-friction resin layer 13 is not particularly limited as long as the slide resistance value is lower than the slide resistance value of the inner circumferential surface of the porous resin layer 14, and is, for example, from 10 to 24, preferably from 12 to 23.

The slide resistance value (unit: N) of the inner circumferential surface of the low-friction resin layer 13 is, for example, from 0.36-fold to 0.90-fold, preferably from 0.44-fold to 0.85-fold the slide resistance value (unit: N) of the inner circumferential surface of the porous resin layer 14.

The inner circumferential surface of the low-friction resin layer 13 is preferably fully in contact with the entire outer circumferential surface of the pipe body 12, and covers the outer circumferential surface of the pipe body 12. The "fully in contact with" here means not a need for completely close contact of the entire surface, but substantial contact of the entire surface. Accordingly, for example, in a case in which the porous resin layer 14 and the low-friction resin layer 13 are formed with being wound by a laminated body of a first sheet having a sheet shape for forming the porous resin layer 14 (hereinafter, also referred to as "porous resin sheet") and a second sheet having a sheet shape for forming the low-friction resin layer 13 (hereinafter, also referred to as "low-friction resin sheet"), a seam portion may be partially separated or a portion wrinkled between the pipe body 12 and the covering layer 20 may be partially separated.

The thickness of the low-friction resin layer 13 is preferably in a range of from 0.05 mm to 7 mm, more preferably from 0.08 mm to 5 mm, still more preferably from 0.1 mm to 3 mm from the viewpoint of followability with respect to the covering layer. The thickness of the low-friction resin layer 13 is defined as the average value of values obtained by subjecting the low-friction resin layer 13 taken out from the composite pipe 10, to measurement at any 3 points.

Next, the action of the composite pipe 10 of the embodiment is described.

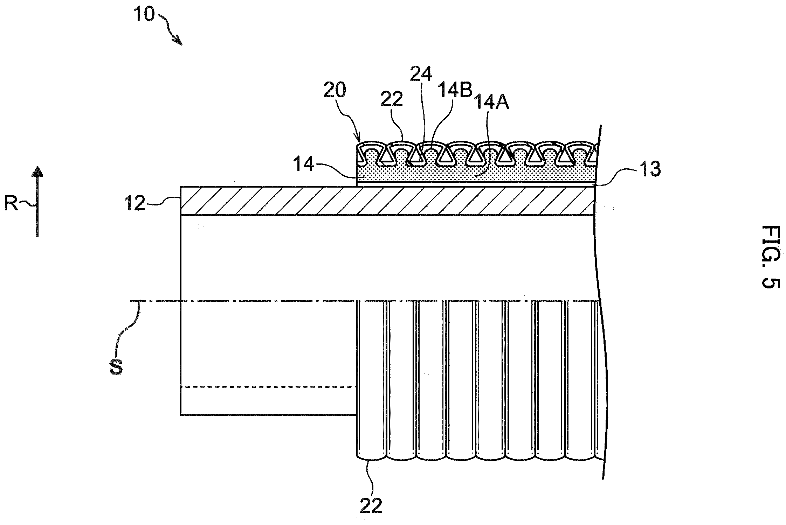

When the composite pipe 10 according to the embodiment and a coupling are connected, any force in a direction in which the covering layer 20 is shortened in the axial direction S to expose the pipe body 12 acts on the covering layer 20 in the state illustrated in Figure 2. Thus, the covering layer 20 at one end is transferred in a direction in which the pipe body 12 is exposed, as illustrated in Figure 5.

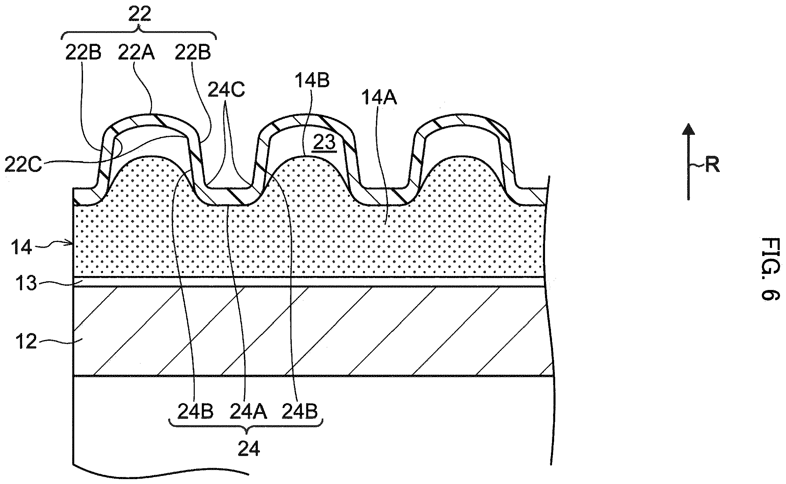

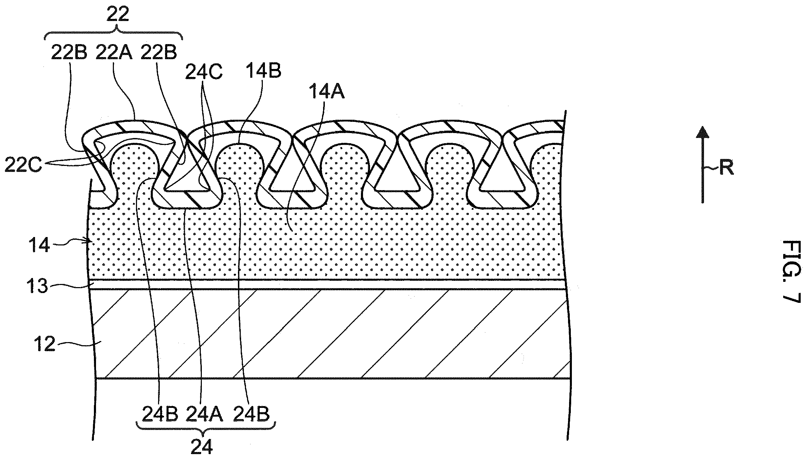

It is preferable in the outer wall 22A of the ridge portion 22 and the inner wall 24A of the groove portion 24 that the length L1 is longer than the length L2 in the axial direction S and the thickness H1 is less than the thickness H2. Thus, the outer wall 22A is more easily deformed than the inner wall 24A, and is deformed so as to swell outward in the radial direction as illustrated in Figure 6. Subsequently, the outer bent portion 22C of the ridge portion 22 and the inner bent portion 24C of the groove portion 24 are deformed so that the ridge portion 22 approaches to adjacent one, as illustrated in Figure 7. Thus, the covering layer 20 at one end is easily transferred in a direction in which the pipe body 12 is exposed, as illustrated in Figure 5. Thus, deformation is made so that the outer walls 22A swells out in shortening of the covering layer 20, and thus swelling of the groove portions 24 outward in the radial direction and/or distortion deformation due to no approaching of the ridge portions 22 to adjacent one can be suppressed even in the presence of more or less variations in the bending angle and the thickness of the covering layer 20. Thus, being deteriorated of the appearance of the covering layer 20 shortened can be inhibited.

In the embodiment, the low-friction resin layer 13 lower in the slide resistance value of the inner circumferential surface than the slide resistance value of the inner circumferential surface of the porous resin layer 14 is provided between the porous resin layer 14 and the pipe body 12. Thus, the porous resin layer 14 and the low-friction resin layer 13 favorably follow the movement of elongation in the axial direction, of the covering layer 20, in returning of the covering layer 20 after shortening and deforming an end of the covering layer 20 for exposure of an end of the pipe body 12, and a phenomenon is suppressed in which entanglement and thus partial curling in clusters occur.

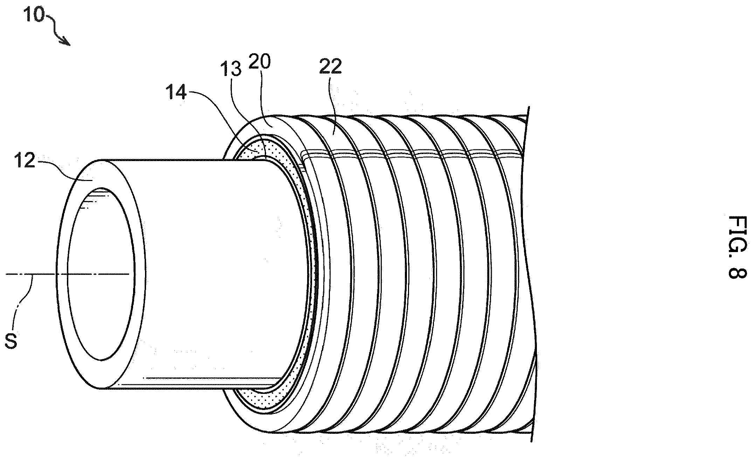

The porous resin layer 14 is preferably compressed by the inner walls 24A and the pipe body 12, whereby the compressively held portion 14A is in close contact with the covering layer 20, and the projection portions 14B is engaged between side walls 24B of adjacent groove portions 24 and thus more easily shortened together with the covering layer 20. Thus, an end of the pipe body 12 can be exposed as illustrated in Figure 8.

While the thickness H1 of the outer walls 22A is set to be less than the thickness H2of the inner walls 24A in the embodiment, the thickness H1 may be the same as the thickness H2.

While the outer walls 22A has a substantially straight shape in the axial direction S in the embodiment, the outer walls may have an arc shape swelling outward in the radial direction. The inner walls 24A may also have an arc shape swelling inward in the radial direction.

The porous resin layer 14 is preferably compressed by the inner walls 24A and the pipe body 12 in the embodiment. Thus, the compressively held portion 14A is in close contact with the covering layer 20, and the projection portions 14B is engaged between side walls 24B of adjacent groove portions 24. Accordingly, the porous resin layer 14 more easily follows the movement of the covering layer 20, and the porous resin layer 14 less likely to remain on the outer circumferential surface of the pipe body 12 and more easily shortened together with the covering layer 20.

### (Manufacturing Method)

Next, a method of manufacturing the composite pipe 10 of the embodiment is described.

The method of manufacturing the composite pipe 10 includes, for example, a step of winding a laminated body of the low-friction resin sheet for forming the low-friction resin layer 13 and the porous resin sheet for forming the porous resin layer 14 onto the outer circumferential surface of the pipe body 12 so that the porous resin sheet is located more outside than the low-friction resin sheet, thereby layering the pipe body 12, the low-friction resin layer 13, and the porous resin layer 14 in the listed order, and a step of forming the covering layer 20 on the outer circumferential surface of the porous resin layer 14.

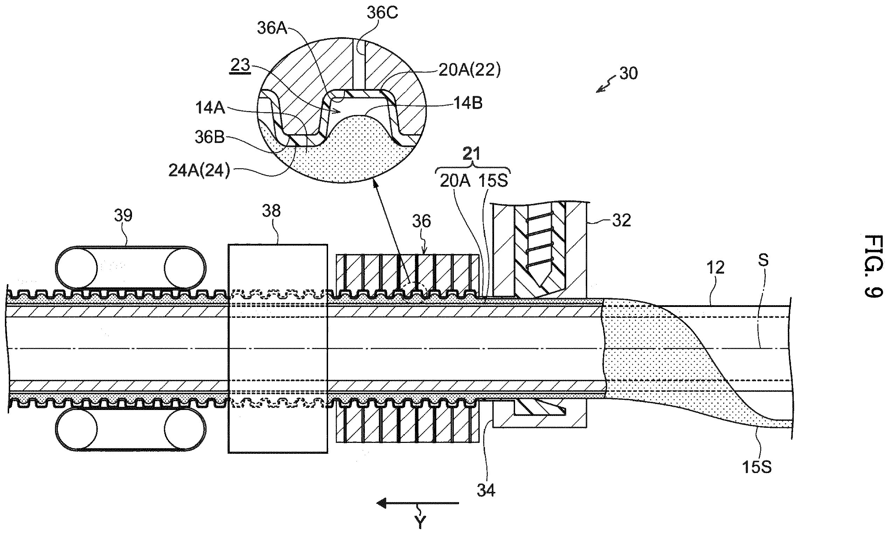

For example, a manufacturing apparatus 30 illustrated in Figure 9 can be used for manufacturing the composite pipe 10. The manufacturing apparatus 30 includes an extruder 32, a die 34, a corrugation mold 36, a cooling tank 38, and a receiving apparatus 39. The right section in Figure 9 is defined as being upstream in the manufacturing flow of the composite pipe 10 in the manufacturing apparatus 30, and the composite pipe is manufactured with the pipe body 12 being transferred from the right to the left. Hereinafter, the transferring direction is referred to as "manufacturing direction Y". The die 34, the corrugation mold 36, the cooling tank 38, and the receiving apparatus 39 are disposed in the listed order in the manufacturing direction Y, and the extruder 32 is disposed upstream relative to the die 34.

A sheet-shaped member 15S in which the pipe body 12, and a laminated body of the low-friction resin sheet for forming the low-friction resin layer 13 and the porous resin sheet for forming the porous resin layer 14, but not illustrated, are wound in the form of a roll is disposed upstream relative to the die 34. The pipe body 12 and the sheet-shaped member 15S formed in the form of a roll are pulled by the receiving apparatus 39 in the manufacturing direction Y, and thus continuously extracted. The sheet-shaped member 15S is wound onto the entire outer circumferential surface of the pipe body 12 continuously extracted, just before the die 34. The sheet-shaped member 15S isslackened just before the die 34 in order not to allow a tensile force to act, and is inserted into the die 34.

The outer circumferential surface of the sheet-shaped member 15S wound onto the outer circumferential surface of the pipe body 12 is applied a resin material molten (a molten product of a resin composition for formation of the covering layer 20) cylindrically extruded from the die 34, and a resin layer 20A is formed. The resin here used is low-density polyethylene (LDPE) having an MFR of 0.25 or more, whereby the resin material easily enters pores (air bubbles) of the porous resin sheet, thereby resulting in an enhancement in adhesion of the sheet-shaped member 15S and the resin layer 20A.

After a tubular extruded product 21 including the pipe body 12, the sheet-shaped member 15S, and the resin layer 20A is formed, a corrugation step (step of formation of a bellows shape) is performed in the corrugation mold 36 disposed downstream relative to the die 34. The corrugation mold 36 corresponds to, for example, a pair of molds, and all the molds have a semi-arc inner surface. Each annular cavity 36A is formed on a portion of the inner circumferential surface of such a mold, corresponding to the ridge portions 22 of the covering layer 20, and each annular inner projection 36B is formed on a portion thereof, corresponding to the groove portions 24, and has a bellows shape. Each vent 36C is formed in such a cavity 36A, the vent being formed with having one end in communication with such a cavity 36A and penetrating through each of such corrugation molds 36. Suction in such a cavity 36A is performed from the outside of each of such corrugation molds 36 via the vent 36C.

Such a pair of corrugation molds 36 approaches to the resin layer 20A from two directions downstream relative to the die 34 and the inner surfaces thereof are brought into contact therewith, and the corrugation molds are transferred together with the pipe body 12 in the manufacturing direction Y with the outer circumferential surface of the tubular extruded product 21 being covered under pushing of the resin layer 20A by the inner projection 36B. Suction from the outside of the corrugation molds 36 is here performed to thereby impart a negative pressure in the cavity 36A. Thus, the resin layer 20A is transferred outward in the radial direction, and a bellows-shaped covering layer 20 along with each of the corrugation molds 36 is formed.

The sheet-shaped member 15S is preferably a sheet-shaped member in which a laminated body of the low-friction resin sheet and the porous resin sheet adhering to each other according to a flame lamination method (flame lamination adhesion body) is wound in the form of a roll. The flame lamination adhesion body is used, thereby pushing back the resin layer 20A from the porous resin layer 14 outward in the radial direction and pushing out the resin layer 20A into contact portions between the pair of corrugation molds 36 are inhibited, thereby resulting in suppression of any burr on the outside of the covering layer 20 in the radial direction.

The sheet-shaped member 15S enters the cavity 36A in the protrusion space 23 corresponding to the ridge portions 22 of the covering layer 20, and the projection portions 14B is formed. A portion corresponding to the inner walls 24A of the groove portions 24 of the covering layer 20 is not only kept with adhering to the covering layer 20, but also compressed between the pipe body 12 and the inner walls 24A, and the compressively held portion 14A is formed.

After the corrugation step is performed on each of the corrugation molds 36, the covering layer 20 is cooled in a cooling tank 38. Thus, the composite pipe 10 is manufactured.
<1> A composite pipe including a pipe body having a tubular shape and including a resin material, a covering layer including a resin material, which is tubular and covers the outer circumferential surface of the pipe body, which has a bellows shape with annular ridge portions protruding outwardly in a radial direction and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body, a porous resin layer being disposed between the pipe body and the covering layer and being held by the groove portions and the pipe body, and a low-friction resin layer disposed between the pipe body and the porous resin layer, the low-friction resin layer having a lower slide resistance value of the inner circumferential surface thereof than the slide resistance value of the inner circumferential surface of the porous resin layer.
<2> The composite pipe according to <1>, wherein a thickness of the porous resin layer in a natural state is greater than a thickness of the low-friction resin layer.
<3> The composite pipe according to <1> or <2>, wherein the porous resin layer and the low-friction resin layer are adhered to each other.
<4> The composite pipe according to <3>, wherein the porous resin layer and the low-friction resin layer constitute a laminated body formed by flame lamination adhesion.
<5> The composite pipe according to any one of <1> to <4>, wherein the porous resin layer has a density of from 12 kg/m³ to 22 kg/m³.
<6> The composite pipe according to any one of <1> to <5>, wherein the porous resin layer has a hysteresis loss of 42% or more.
<7> The composite pipe according to any one of <1> to <6>, wherein the porous resin layer has a sheet shape and contacts with an entire outer circumferential surface of the low-friction resin layer.
<8> The composite pipe according to any one of <1> to <7>, wherein a length, in the axial direction, of the porous resin layer in a natural state, is from 90% to 100% of a length, in the axial direction, of the covering layer.
<9> The composite pipe according to any one of <1> to <8>, wherein the covering layer includes polyethylene as a main component and has a density of from 915 kg/m³ to 940 kg/m³.
<10> The composite pipe according to any one of <1> to <9>, wherein the covering layer has a melt flow rate (MFR) of from 0.25 to 0.8.
<11> The composite pipe according to any one of <1> to <10>, wherein a length, in the axial direction, of each of the ridge portions, is greater than a length, in the axial direction, of each of the groove portions.
<12> The composite pipe according to any one of <1> to <11>, wherein a length, in the axial direction, of each of the ridge portions is at least 1.2-times a length, in the axial direction, of each of the groove portions.
<13> The composite pipe according to any one of <1> to <12>, wherein a thickness of the ridge portions of the covering layer is less than a thickness of the groove portions of the coverinng layer.
<14> The composite pipe according to any one of <1> to <13>, wherein the covering layer has a thickness of 0.1 mm or greater at a thinnest portion and a thickness of 0.4 mm or less at a thickest portion.
<15> A method of manufacturing the composite pipe according to any one of <1> to <14>, the method including a step of winding a laminated body around the outer circumferential surface of the pipe body, the laminated body comprising a first sheet for forming the low-friction resin layer and a second sheet for forming the porous resin layer, which are disposed one on the other, and the second sheet being located at an outer side with respect to the first sheet, and a step of forming the covering layer on an outer circumferential surface of the porous resin layer.
<16> A method of manufacturing the composite pipe according to <4>, the method including a step of winding a laminated body around the outer circumferential surface of the pipe body, the laminated body comprising a first sheet for forming the low-friction resin layer and a second sheet for forming the porous resin layer, which are adhered to each other by a flame lamination method, and the second sheet being located at an outer side with respect to the first sheet, and a step of forming the covering layer on an outer circumferential surface of the porous resin layer.

### EXAMPLES

Hereinafter, the present disclosure is further specifically described with reference to Examples, but the present disclosure is not intended to be limited to the following Examples.

### [Laminated Body A (Adhesion Body by Adhesive)]

A urethane foam sheet A was produced as a porous resin sheet, according to the following synthesis method.

A polyol component and an isocyanate component in a tank were metered, placed in a mixer, and mixed, and the resulting mixture was discharged onto a conveyor belt and continuously foamed in a heating furnace, thereby producing foam. Thereafter, the foam was sliced and formed into a sheet, thereby providing a urethane foam sheet A.

The urethane foam sheet A had a thickness (average thickness in a natural state) of 2.5 mm. The density of the resulting urethane foam sheet A was measured according to the above method, and as a result, was 16 kg/m³. The hysteresis loss of the urethane foam sheet A was measured according to the above method, and as a result, was 47.5%.

Nylon tricot (thickness: 0.1 mm) and an emulsion-type adhesive were used as a low-friction resin sheet and an adhesive, respectively, thereby producing a laminated body A (adhesion body by an adhesive, the slide resistance value of the surface of the low-friction resin sheet in the body was 21.9 N).

### [Laminated Body B (Flame Lamination Adhesion Body)]

A laminated body B (flame lamination adhesion body) used was a flame lamination adhesion sheet, obtained by adhesion of a urethane foam sheet B as a porous resin sheet and nylon tricot as a low-friction resin sheet according to a flame lamination method (the slide resistance value of the surface of the low-friction resin sheet in the sheet was 22.9 N).

The urethane foam sheet B had a thickness (average thickness in a natural state) of 2.5 mm and the nylon tricot had a thickness of 0.1 mm.

### [Laminated Body C (Stacked Body)]

The urethane foam sheet A and a non-woven polyester fabric (thickness: 0.15 mm, mass per unit area: 20 g/m²) were used as a porous resin sheet and a low-friction resin sheet, respectively, and the urethane foam sheet A and the non-woven polyester fabric did not adhere to each other, but were stacked, thereby providing a laminated body C (stacked body, the slide resistance value of the surface of the low-friction resin sheet in the body was 22.6 N).

The urethane foam sheet A was fully in contact with the outer circumferential surface of the non-woven polyester fabric.

### [Single Layer Body D]

The urethane foam sheet A serving as a porous resin sheet was used as a single layer body D (the slide resistance value of the surface was 27.2 N), as it was.

### [Example 1]

### (Production of Composite Pipe)

A manufacturing apparatus configured as illustrated in Figure 9 was prepared. A polybutene pipe (having an outer diameter of 22.0 mm) wound in the form of a coil was mounted as a pipe body 12, and the laminated body A was mounted as a sheet-shaped member 15S. A receiving apparatus 39 was operated to continuously extract the polybutene pipe in the form of a coil and the laminated body A in the form of a roll, and the laminated body A was wound onto the entire outer circumferential surface of the polybutene pipe so that the low-friction resin sheet was located inside and the porous resin sheet was located outside. The laminated body A was slackened just before a die 34, and was inserted into the die 34.

Next, the outer circumferential surface of the urethane foam sheet A in the laminated body A was applied a resin material molten (low-density polyethylene (LDPE)) cylindrically extruded from the die 34, and a resin layer was formed.

Next, a pair of corrugation molds 36 disposed downstream relative to the die 34 were allowed to approach to the resin layer from two directions and the inner surfaces thereof were brought into contact therewith. The corrugation molds 36 were herea pair of molds having the same inner surface shape and all having a semi-arc inner surface. Each annular cavity 36A and each annular inner projection 36B corresponding to the ridge portions and the groove portions of a covering layer to be formed, respectively, were formed on a portion of such an inner circumference, and had a bellows shape. Each vent 36C was formed on such a cavity 36A, the vent being formed with having one end in communication with such a cavity 36A and penetrating through each of the corrugation molds 36. A resin layer 20A was transferred together with the polybutene pipe in a manufacturing direction Y with the resin layer 20A being pushed by the inner projection 36B, and suction was performed from the outside of each of the corrugation molds 36, thereby imparting a negative pressure in the cavity 36A. Thus, a bellows-shaped covering layer along with each of the corrugation molds 36 was formed.

Next, the resultant was cooled in a cooling tank 38, thereby providing a composite pipe.

The distance between the inner surface of groove portions 24 of the covering layer and the outer surface of the polybutene pipe (pipe body), namely, the difference (compressively held portion clearance) from the outer circumferential surface of the pipe body to the inner surface in the radial direction, of an inner walls 24A of the covering layer, was 2.0 mm.

The covering layer of the resulting composite pipe had a length L1 in the axial direction S, of aridge portions 22, of 2.0 mm, and a length L2 in the axial direction S, of the groove portions 24, of 1.4 mm.

The covering layer had a thickness of 0.3 mm in the thinnest portion and a thickness of 0.4 mm in the thickest portion.

The difference ΔR in radius between the outer surface of the ridge portions 22 and the outer surface of the groove portions 24 was 587% of the average of the thickness of the covering layer 20.

The diameter of the covering layer (the outer diameter of the outermost portion) was 30.5 mm.

The density of the covering layer was 920 kg/m³.

The MFR of the covering layer was 0.35.

The non-woven polyester fabric layer (low-friction resin layer) was fully in contact with the outer surface of the pipe body.

### [Examples 2 to 3 and Comparative Example 1]

Each composite pipe was obtained in the same manner as in Example 1 except that any laminated body or single layer body described in Table 1 below was used instead of the laminated body A.

### <Evaluation Tests>

### -Occurrence of entanglement of urethane foam sheet layer (porous resin layer)-

A movement was performed in which an end of the covering layer was pulled by 50 mm, and shortened and deformed for exposure of the polybutene pipe (pipe body), and thereafter the covering layer was again elongated for returning to the original position. It was here visually confirmed whether or not a phenomenon occurred in which the urethane foam sheet layer (porous resin layer) was entangled and partially curled in clusters due to no following thereof with respect to the movement of elongation of the covering layer, and whether or not the urethane foam sheet layer was returned to the original position due to following thereof with respect to the movement of elongation of the covering layer and thus no entanglement. The results are shown in Table 1 below.

### -Occurrence of Burr-

It was visually confirmed whether or not the resin material for covering layer formation entered the contact portion between the pair of corrugation molds, thereby causing the occurrence of burr on the outside of the covering layer in the radial direction, in production of the composite pipe. The results are shown in Table 1 below.

**[Table 1]**

| | Laminated body or single layer body | Evaluation | |
|---|---|---|---|
| | | Entanglement | Burr |
| Example 1 | Laminated body A (adhesion body by adhesive) | Not occurred | Not occurred |
| Example 2 | Laminated body B (flame lamination adhesion body) | Not occurred | Not occurred |
| Example 3 | Laminated body C (stacked body) | Not occurred | Not occurred |
| Comparative Example 1 | Single layer body D | Occurred | Not occurred |

While the occurrence of entanglement was confirmed in Comparative Example 1 in which the single layer body was used instead of the laminated body, no occurrence of entanglement was confirmed in Examples 1 to 3 in which the laminated body of the porous resin sheet and the low-friction resin sheet was used.

No burr was confirmed in all the Examples.

The disclosure of Japanese Patent Application No. 2016-251951 is herein incorporated by reference in its entity.

All documents, patent applications, and technical standards described herein are herein incorporated by reference, as if each individual document, patent application, and technical standard were specifically and individually indicated to be incorporated by reference.

### Reference Signs List

10 composite pipe, 12 pipe body, 13 low-friction resin layer, 14 porous resin layer, 14A compressively held portion, 14B projection portions, 15S sheet-shaped member, 20 covering layer, 22 ridge portions, 22A outer walls, 23 protrusion space, 24 groove portions, 24A inner walls, S axial direction

## Claims

1. A composite pipe comprising:
a pipe body having a tubular shape and comprising a resin material;
a covering layer comprising a resin material, the covering layer having a tubular shape and covering an outer circumferential surface of the pipe body, the covering layer having a bellows shape with annular ridge portions protruding outwardly in a radial direction and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body,
a porous resin layer being disposed between the pipe body and the covering layer and being held by the groove portions and the pipe body; and
a low-friction resin layer disposed between the pipe body and the porous resin layer, an inner circumferential surface of the low-friction resin layer having a lower slide resistance value than a slide resistance value of an inner circumferential surface of the porous resin layer.

2. The composite pipe according to claim 1, wherein a thickness of the porous resin layer in a natural state is greater than a thickness of the low-friction resin layer.

3. The composite pipe according to claim 1 or 2, wherein the porous resin layer and the low-friction resin layer are adhered to each other.

4. The composite pipe according to claim 3, wherein the porous resin layer and the low-friction resin layer constitute a laminated body formed by flame lamination adhesion.

5. The composite pipe according to any one of claims 1 to 4, wherein the porous resin layer has a density of from 12 kg/m³ to 22 kg/m³.

6. The composite pipe according to any one of claims 1 to 5, wherein the porous resin layer has a hysteresis loss of 42% or more.

7. The composite pipe according to any one of claims 1 to 6, wherein the porous resin layer has a sheet shape and contacts with an entire outer circumferential surface of the low-friction resin layer.

8. The composite pipe according to any one of claims 1 to 7, wherein a length, in the axial direction, of the porous resin layer in a natural state is from 90% to 100% of a length, in the axial direction, of the covering layer.

9. The composite pipe according to any one of claims 1 to 8, wherein the covering layer comprises polyethylene as a main component and has a density of from 915 kg/m³ to 940 kg/m³.

10. The composite pipe according to any one of claims 1 to 9, wherein the covering layer has a melt flow rate (MFR) of from 0.25 to 0.8.

11. The composite pipe according to any one of claims 1 to 10, wherein a length, in the axial direction, of each of the ridge portions is greater than a length, in the axial direction, of each of the groove portions.

12. The composite pipe according to any one of claims 1 to 11, wherein a length, in the axial direction, of each of the ridge portions is at least 1.2-times a length, in the axial direction, of each of the groove portions.

13. The composite pipe according to any one of claims 1 to 12, wherein a thickness of the ridge portions of the covering layer is less than a thickness of the groove portions of the covering layer.

14. The composite pipe according to any one of claims 1 to 13, wherein the covering layer has a thickness of 0.1 mm or greater at a thinnest portion and a thickness of 0.4 mm or less at a thickest portion.

15. A method of manufacturing the composite pipe according to any one of claims 1 to 14, the method comprising:
a step of winding a laminated body around the outer circumferential surface of the pipe body, the laminated body comprising a first sheet for forming the low-friction resin layer and a second sheet for forming the porous resin layer, which are disposed one on the other, and the second sheet being located at an outer side with respect to the first sheet; and
a step of forming the covering layer on an outer circumferential surface of the porous resin layer.

16. A method of manufacturing the composite pipe according to claim 4, the method comprising:
a step of winding a laminated body around the outer circumferential surface of the pipe body, the laminated body comprising a first sheet for forming the low-friction resin layer and a second sheet for forming the porous resin layer, which are adhered to each other by a flame lamination method, and the second sheet being located at an outer side with respect to the first sheet; and
a step of forming the covering layer on an outer circumferential surface of the porous resin layer.
